# EUROPEAN PATENT SPECIFICATION

(11) **EP 3 898 069 B1**
(45) Date of publication and mention of the grant of the patent: **06.11.2024**
(21) Application number: 19829209.6
(22) Date of filing: 20.12.2019
(51) Int. Cl.: B23K 31/12, B23K 26/082

(54) **METHOD AND SYSTEM FOR SUPERVISION OF A SCAN OF AN ENERGY BEAM**
VERFAHREN UND SYSTEM ZUR ÜBERWACHUNG EINER ABTASTUNG EINES ENERGIESTRAHLS
PROCÉDÉ ET SYSTÈME DE SUPERVISION D'UN BALAYAGE D'UN FAISCEAU D'ÉNERGIE

(30) Priority: 21.12.2018 EP 18382982
(43) Date of publication of application: 27.10.2021
(73) Proprietor: Etxe-Tar, S.A., 20870 Elgoibar (Guipúzcoa) (ES)
(72) Inventor: GABILONDO, Jose Juan, 20870 Elgoibar (Guipúzcoa) (ES)
(74) Representative: Balder IP Law, S.L.
(86) International application number: PCT/EP2019/086793
(87) International publication number: WO 2020/128041

(56) References cited:
- EP-A1- 0 979 163
- WO-A1-2018/087556
- US-A1- 2006 215 246
- US-A1- 2018 056 443

## Description

### TECHNICAL FIELD

The present invention relates to processing of parts or pieces with an apparatus providing an energy beam, such as a laser apparatus. More specifically, the present invention relates to supervision of the scanning pattern followed by a scanner for such an apparatus.

### STATE OF THE ART

Apparatuses emitting an energy beam, such as laser apparatuses, are long known and are widely used for processing different objects owing, inter alia, to the precision and energy with which they may process the objects. For example, laser may be used for additive manufacturing, welding, cutting, hardening of objects such as metal sheets, vehicle components like crankshafts, etc.

Recently, improvements to energy beam radiation have been made. These consist in the provision of effective spots of the energy beam by scanning, with high speeds, the energy beam according to patterns. The energy distribution of the effective spot may be adjusted and controlled by varying the scanning patterns, speeds and power with which the source provides the energy beam. Examples of such improvements are disclosed in patent documents WO-2014/037281-A2 and WO-2016/026706-A1.

High speed scanning requires the provision of scanners that may be operated such that they scan the energy beam according to scanning patterns and with the required speeds. However, in many cases, current scanner technology is not capable of scanning the energy beam with such demanding conditions, for example when the scanning pattern or trajectory requires small rotations of the mirrors within the scanner and/or when the energy beam is scanned by rotating the mirrors at the maximum supported speed. Therefore, due to the limitations of the scanner, there exists a difference between the predetermined scanning pattern, that is, the desired scanning pattern, and the actual scanning pattern, that is, the pattern that the spot provided by the energy beam emitting apparatus has followed.

There are some developments intended to have some control of this phenomenon, for example: EP-0979163-A1, which relates to an apparatus for forming three-dimensional objects from a medium solidifiable when subjected to a beam of pulsed radiation; a computer controls the movement of the mirrors which guide the laser beam across the surface of the solidifiable medium; pulsing of the laser beam is correlated to the position of the mirrors and thus, is not dependent upon time; the pulsing linked to position of beam placement allows controlled and repeatable use of a pulsed beam for the formation of objects. US-2006215246-A1 (describing all the steps and features of the preamble of claims 1 and 8), which relates to a laser scanning system in a rapid-prototyping system that is controlled during vector scanning by providing a commanded-position signal to each of first and second rotary motive devices to rotate respective mirrors of the scanning system, each mirror undergoing acceleration at the beginning of the vector, wherein the commanded-position signals are calculated based on physical mathematical modeling of the acceleration of the mirrors taking into account effects of inertia of the scanning system, and actual positions of the mirrors are measured with fast-response devices and digital feedback control of the mirror positions is employed at a periodic rate sufficiently small to maintain a following error of the laser spot less than about 200 microseconds. None of these developments, however, detect if the ongoing scanning is according to the expected behavior of the mirrors and establish anomalous operation thereof.

Further, in some occasions, the scanner cannot cope with the required speeds and stops working for certain time duration, for example few milliseconds, tens or hundreds of milliseconds, or even few seconds. Even when the scanner is not working for few milliseconds, the object processed by the energy beam emitting apparatus may be incorrectly processed, which means that the quality thereof is insufficient for the use of the same.

Generally, the energy beam emitting source, such as a laser source, of such apparatuses provides an energy beam with high power, e.g. over 1 kW. If the scanner breaks, for example a mirror thereof gets broken due to the high power of the energy beam, there are serious safety concerns because the energy beam could undesirably be aimed outside from the working area, for instance aimed at a person or a machine within the premises.

There exists a need to know whether a scanner of an apparatus providing an energy beam scans the energy beam according to the expected capacity of the scanner both for reasons of safety and quality of the objects processed by the apparatus.

### DESCRIPTION OF THE INVENTION

A first aspect of the invention relates to a method for supervision of a scan of an energy beam as defined in claim 1, comprising: providing an apparatus configured to provide the energy beam; providing a scanner configured to scan the energy beam, the scanner comprising a first mirror and a second mirror; operating the apparatus and the scanner such that the energy beam is provided while it is scanned according to a predetermined scanning pattern; determining, at least one processor of a computer device or system, an actual scanning pattern of the energy beam, when both the apparatus and the scanner are operated, by processing measurements provided by encoders of the first mirror and the second mirror; and comparing, the at least one processor, the actual scanning pattern with a predetermined threshold area.

The apparatus configured to provide the energy beam may be an apparatus for emitting an energy beam. The apparatus may be a laser apparatus for emitting a laser beam.

The scanner is commanded to scan the energy beam according to the predetermined scanning pattern. The predetermined scanning pattern may be any with which it is desired to irradiate the object to be processed by the apparatus. For example, the predetermined scanning pattern may be a pattern intended to provide an energy distribution on the object such that an effective spot of the energy beam is provided. There may be a variety of scanning patterns, for example, scanning patterns comprising a plurality of parallel lines, scanning patterns comprising curvilinear lines, scanning patterns in which the effective spot follows a path involving sudden changes of the direction, corresponding to sharp corners in the pattern, for example, changes in the direction by 90 degrees, and scanning patterns comprising discontinuous lines or even a set of discrete points not forming one or more lines. As the energy beam is scanned the energy deposited on the object builds up thereby providing an effective spot of the energy beam. Such pattern is repeated a number of times and, simultaneously, either the pattern is moved over the surface of the object by means of the scanner, that is, there is a superimposed movement for processing different parts of the object, or the pattern is provided yet maintained static (i.e. the scanner does not move it over the surface of the object) but the axes of the energy beam emitting apparatus are moved for processing different parts of the object.

In preferred embodiments, the energy beam is a beam of electromagnetic radiation or a light beam, for example, a laser beam. In preferred embodiments, the power of the energy beam is over e.g. 1 kW, for instance 2 kW, 3 kW, 5 kW, etc. and less than e.g. 20 kW, for instance less than 15 kW or less than 10 kW.

Even though the scanner is commanded to scan the energy beam according to the predetermined scanning pattern, owing to the limitations of the scanner, the actual scanning pattern of the energy beam scanned differs from the predetermined scanning pattern. This is so due to many factors, for example, the weight and moment of inertia of the mirrors, the rotation speeds of the mirrors, the accuracy in the rotations of the mirrors, etc. Based on a predetermined scanning pattern and a scanner, for instance by making experimental tests it may be determined what is the expected scanning pattern of the energy beam scanned, which is different from the predetermined scanning pattern for the aforementioned reasons. For example, a number of experimental tests may be conducted for statistically determining how much does the spot of the energy beam deviate from where it usually illuminates a surface; that is to say, as the spot of the energy beam does not exactly repeat the pattern in each cycle, the expected scanning pattern may be determined in accordance with the greatest illuminated surface as the energy beam is scanned according to the predetermined scanning pattern a plurality of times.

However, in some cases the scanner cannot even scan the energy beam with the expected scanning pattern, let alone with the predetermined scanning pattern and, thus, any differences between the expected scanning pattern or the predetermined scanning pattern and the actual scanning pattern may be due to either the underperformance of the scanner due to its limitations, or the failure of the scanner itself, for example a mirror not working anymore or a broken mirror. This may lead to incorrect processing of the object, and/or risk of aiming the energy beam outside of the working area.

While the energy beam is scanned during operation of the apparatus for emitting an energy beam, the encoders of the mirrors of the scanner provide measurements of one of: the absolute position of the mirror within the scanner, the angle of the mirror, and the movement of the mirror. These measurements thus provide information about the operation of the scanner while it scans the energy beam, particularly it can be determined what the actual scanning pattern is. Oftentimes commercially available scanners for energy beam radiating apparatuses are already provided with the encoders.

The comparison of the actual scanning pattern with the predetermined threshold area may reveal if there have been problems in the scan. To this end, it may be determined that the scan is anomalous if the result of the comparison is that at least part of the actual scanning pattern falls either within the predetermined threshold area or outside of the predetermined threshold area.

In some embodiments, the predetermined threshold area (or a majority thereof) does not comprise an expected scanning pattern; and it is determined by the at least one processor that the scan of the energy beam is anomalous if at least part of the actual scanning pattern is outside of the predetermined threshold area. In some of these embodiments, the predetermined threshold area comprises the predetermined scanning pattern. In these embodiments, preferably it is determined that the scan is not anomalous otherwise, i.e. if the actual scanning pattern is inside of the predetermined threshold area, that is to say, no part of the actual scanning pattern is outside of the predetermined threshold area.

In some embodiments, the predetermined threshold area comprises an expected scanning pattern; and it is determined by the at least one processor that the scan of the energy beam is anomalous if at least part of the actual scanning pattern is inside of the predetermined threshold area. In these embodiments, preferably it is determined that the scan is not anomalous otherwise, i.e. if the actual scanning pattern is outside of the predetermined threshold area, that is to say, no part of the actual scanning pattern is inside of the predetermined threshold area.

Whether the actual scanning pattern shall be inside or outside of the predetermined threshold area for determining that the scan is anomalous depends on how the predetermined threshold area is defined: either as a threshold area corresponding to the expected scanning pattern (thus, it is desirable that the actual scanning pattern falls within the threshold area), or as a threshold area corresponding to the deviation from the expected scanning pattern (thus, it is not desirable that the actual scanning pattern falls within the threshold area because the threshold area represents deviation from the expected scanning pattern). In other words, the threshold area can also be seen as either a forbidden area when it is defined that it is not desirable that the actual scanning pattern falls within the threshold area, or as an area representing the correct scan when it is defined that it is desirable that the actual scanning pattern falls within the threshold area. Moreover, in the latter case, the predetermined threshold area may comprise the predetermined scanning pattern, that is, the desired scanning pattern that is commanded to the scanner. This is so because the closer the actual scanning pattern is to the predetermined scanning pattern, the more likely it is that the scanner has a problem: for example, upon breaking of a mirror, the weight and moment of inertia of the same changes thereby making it less demanding to follow the predetermined scanning pattern.

The expected scanning pattern is defined by or is based on the predetermined scanning pattern. In this sense, it is possible to provide expected scanning patterns by scanning an energy beam according to a predetermined scanning pattern, preferably in same or similar conditions as when objects are to be processed by the energy beam emitting apparatus, and measure the actual scanning pattern or trajectory followed by the energy.

In some embodiments, the method further comprises indicating, if it is determined that the scan of the energy beam is anomalous, that an object that was processed by the apparatus is incorrectly processed.

When it is determined that the scan is anomalous, it is considered that the object during the processing of which the anomalous scan occurred is incorrectly processed. Accordingly, it is indicated that the object is incorrect because the quality thereof may not meet the quality requirements, thereby making possible to avoid the use or sale of said object.

In some embodiments, the method further comprises stopping the apparatus for emitting an energy beam if it is determined that the scan of the energy beam is anomalous.

When it is determined that the scan is anomalous, there exists a risk that the energy beam is not or will not be aimed at the working area. Therefore, operating the apparatus for radiating an energy beam is not safe, and thus it is stopped so as to avoid any possible damages.

In some embodiments, the encoders of the first mirror and the second mirror provide the measurements with a frequency equal to or greater than 10 kHz.

A more accurate determination that a scan is anomalous may require a large number of measurements per second provided by the encoders. Depending on the rotation speeds of the mirrors of the scanners the number of measurements will have to be higher in order to compare the actual scanning pattern with the predetermined threshold area with sufficient resolution. To this end, the number of measurements provided by the encoders of the first and second mirror is preferably 10 kHz or more, e.g. 20 kHz, 30 kHz, 50 kHz, 100 kHz, etc. and less than 150 kHz, and/or less than 100 kHz.

In some embodiments, the actual scanning pattern is determined by further processing measurements provided by encoders of axes of the apparatus.

Sometimes the predetermined scanning pattern commanded to the scanner is adjusted based on the movement of the axes of the apparatus. Hence, the provision of measurements of the encoders of the axes to the at least one processor may be used for determining the actual scanning pattern, which will then be compared with the predetermined threshold area.

In some embodiments, the actual scanning pattern is determined by further processing data of a geometry of the object being processed by the apparatus.

Data about the geometry of the object may also assist in determining the actual scanning pattern. For instance, if the at least one processor has information about the existence of an irregular surface of the object, the existence of cavities, recesses, protrusions and the like on the surface of the object, etc. it may combine that information with the measurements received to determine the actual scanning pattern, which may be influenced by said geometry. The data may be provided in many forms, for example as a digital 3D model representing a 3D geometry of the object, a digital image representing in 2D a surface or a perimeter of the object, etc.

In some embodiments, the energy beam is provided and scanned such that it produces an effective spot of the energy beam on a surface of an object processed by the apparatus, the effective energy spot of the energy beam featuring a two-dimensional energy distribution.

In some embodiments, the scanner is operated such that each of a maximum angular coverage in a first direction and a maximum angular coverage in a second direction is greater than 0° and equal to or less than 45°, the first direction being perpendicular to the second direction. In some of these embodiments, the maximum angular coverage is equal to or less than 20°, and/or equal to or less than 10°, and/or equal to or less than 7°, and/or equal to or less than 5°, and/or equal to or less than 3°, and/or equal to or less than 1°.

The problem of anomalous scans is exacerbated as the maximum angular coverage is reduced. When predetermined scanning patterns involve a reduced maximum angular coverage, the precision required for scanning the laser beam increases due to the small angular rotations the mirrors have to perform during the scan.

Predetermined scanning patterns in reduced maximum angular coverages make possible to control the energy distribution over a small portion of the surface of the processed object, therefore the processing may be more accurate.

In some embodiments, the method further comprises: obtaining data indicative of the actual scanning pattern being different from the predetermined scanning pattern, and modifying the predetermined scanning pattern based on said data indicative of the actual scanning pattern being different from the predetermined scanning pattern.

In some embodiments, the method further comprises identifying and/or tracking anomalous scans. For example, the one or more points in which an actual scanning pattern falls either within a predetermined threshold area or outside of a predetermined threshold area, as the case may be, may be marked. The marked points can be checked later in order to determine quality errors or process error. A quality error may be an incorrectly processed object.

In some embodiments, the method further comprises triggering an alarm when a certain amount of anomalous scans are tracked. The certain amount of anomalous scans may be one or a plurality of anomalous scans.

A second aspect of the invention relates to a system for supervision of a scan of an energy beam as defined in claim 8, comprising: an apparatus configured to provide the energy beam; a scanner configured to scan the energy beam, the scanner comprising a first mirror and a second mirror, each mirror at least comprising an encoder, the scanner and the apparatus being configured to provide the energy beam while it is scanned according to a predetermined scanning pattern; and a computing device or system comprising at least one processor; the at least one processor is configured to: determine an actual scanning pattern of the energy beam, when both the apparatus and the scanner are operated, by processing measurements provided by the encoders of the first mirror and the second mirror; and compare the actual scanning pattern with a predetermined threshold area.

The apparatus configured to provide the energy beam may be an apparatus for emitting an energy beam. The apparatus may be a laser apparatus for emitting a laser beam.

The scanner is commanded to scan the energy beam provided by the apparatus according to the predetermined scanning pattern, for example a pattern intended to provide an energy distribution on the object such that an effective spot of the energy beam is provided. The object is thus processed in a controlled manner with the effective spot.

The scanner scans the energy beam following an actual scanning pattern rather than following the commanded predetermined scanning pattern due to the limitations thereof. Therefore, an expected scanning pattern may be defined in accordance with the predetermined scanning pattern and the scanner (thus considering the general operation of the mirrors). However, the energy beam scanned with the scanner generally deviates from the expected scanning pattern, which may result in the incorrect processing of the object, and/or the possibility of aiming the energy beam outside of the working area.

The encoders of the mirrors provide measurements of one of: the absolute position of the mirror within the scanner, the angle of the mirror, and the movement of the mirror. These measurements provide information about the operation of the scanner while it scans the energy beam, and they make possible to determine what the actual scanning pattern is.

By comparing the actual scanning pattern with the predetermined threshold area, it may be determined if the scan is anomalous.

In some embodiments, the predetermined threshold area (or a majority thereof) does not comprise the predetermined scanning pattern; and the at least one processor is further configured to determine that the scan of the energy beam is anomalous if at least part of the actual scanning pattern is outside of the predetermined threshold area. In these embodiments, preferably the at least one processor determines that the scan is not anomalous otherwise, i.e. if the actual scanning pattern is inside of the predetermined threshold area, that is to say, no part of the actual scanning pattern is outside of the predetermined threshold area.

The predetermined threshold area is defined as a threshold area corresponding to the deviation from the expected scanning pattern (thus, it is not desirable that the actual scanning pattern falls within the threshold area because the threshold area represents deviation from the expected scanning pattern).

In some of these embodiments, the predetermined threshold area comprises the predetermined scanning pattern.

In some embodiments, the predetermined threshold area comprises the predetermined scanning pattern; and the at least one processor is further configured to determine that the scan of the energy beam is anomalous if at least part of the actual scanning pattern is inside of the predetermined threshold area. In these embodiments, preferably the at least one processor determines that the scan is not anomalous otherwise, i.e. if the actual scanning pattern is outside of the predetermined threshold area, that is to say, no part of the actual scanning pattern is inside of the predetermined threshold area.

The predetermined threshold area is defined as a threshold area corresponding to the expected scanning pattern (thus, it is desirable that the actual scanning pattern falls within the threshold area).

The expected scanning pattern is defined by or is based on the predetermined scanning pattern, for example by measuring the actual scanning pattern or trajectory followed by the energy beam when the scanner is commanded to scan according to a predetermined scanning pattern.

In some embodiments, the at least one processor is further configured to indicate, if it determines that the scan of the energy beam is anomalous, that an object that was processed by the apparatus is incorrectly processed.

In some embodiments, the at least one processor is further configured to stop the apparatus for emitting an energy beam if it determines that the scan of the energy beam is anomalous.

In some embodiments, the encoders of the first mirror and the second mirror are configured to provide the measurements with a frequency equal to or greater than 10 kHz.

In some embodiments, the at least one processor determines the actual scanning pattern by further processing measurements provided by encoders of axes of the laser apparatus.

In some embodiments, the at least one processor determines the actual scanning pattern by further processing data of a geometry of the object to be processed by the apparatus.

In some embodiments, the energy beam is provided and scanned so as to produce an effective spot of the energy beam on a surface of an object to be processed by the apparatus, the effective spot featuring a two-dimensional energy distribution.

In some embodiments, the scanner is configured to scan the energy beam such that each of a maximum angular coverage in a first direction and a maximum angular coverage in a second direction is greater than 0° and equal to or less than 45°, the first direction being perpendicular to the second direction. In some of these embodiments, the maximum angular coverage is equal to or less than 20°, and/or equal to or less than 10°, and/or equal to or less than 7°, and/or equal to or less than 5°, and/or equal to or less than 3°, and/or equal to or less than 1°.

In some embodiments, the at least one processor obtains data indicative of the actual scanning pattern being different from the predetermined scanning pattern, and modifies from said data the predetermined scanning pattern.

Similar advantages as those described with reference to the first aspect of the invention also apply to this aspect of the invention.

A third aspect of the invention relates to a computer program product as defined in claim 15, having instructions which, when executed by the at least one processor of the computing device or system of the system according to the second aspect of the present invention, cause the processor to perform the steps of: operating an apparatus and a scanner such that an energy beam thereof is provided while it is scanned with the scanner according to a predetermined scanning pattern; determining an actual scanning pattern of the energy beam, when both the apparatus and the scanner are operated, by processing measurements provided by encoders of a first mirror and a second mirror of the scanner; and comparing the actual scanning pattern with a predetermined threshold area.

In some embodiments, the predetermined threshold area (or a majority thereof) does not comprise an expected scanning pattern; and the instructions cause the computing device or system to determine that the scan of the energy beam is anomalous if at least part of the actual scanning pattern is outside of the predetermined threshold area. In some of these embodiments, the predetermined threshold area comprises the predetermined scanning pattern. In these embodiments, preferably the computing device determines that the scan is not anomalous otherwise, i.e. if the actual scanning pattern is inside of the predetermined threshold area, that is to say, no part of the actual scanning pattern is outside of the predetermined threshold area.

In some embodiments, the predetermined threshold area comprises an expected scanning pattern; and the instructions cause the computing device or system to determine that the scan of the energy beam is anomalous if at least part of the actual scanning pattern is inside of the predetermined threshold area. In these embodiments, preferably the computing device determines that the scan is not anomalous otherwise, i.e. if the actual scanning pattern is outside of the predetermined threshold area, that is to say, no part of the actual scanning pattern is inside of the predetermined threshold area.

In some embodiments, the instructions further cause the computing device or system to indicate, if it is determined that the scan of the energy beam is anomalous, that an object that was processed by the apparatus is incorrectly processed.

In some embodiments, the instructions further cause the computing device or system to stop the apparatus for emitting an energy beam if it is determined that the scan of the energy beam is anomalous.

In some embodiments, the instructions further cause the computing device or system to receive the measurements of the encoders of the first mirror and the second mirror with a frequency equal to or greater than 10 kHz.

The instructions may cause the computing device or system to receive measurements provided by the encoders of the first and second mirror at 10 kHz or more, e.g. 20 kHz, 30 kHz, 50 kHz, 100 kHz, etc., and less than 150 kHz, and/or less than 100 kHz.

In some embodiments, the instructions cause the computing device or system to determine an actual scanning pattern of the energy beam by further processing measurements provided by encoders of axes of the apparatus.

In some embodiments, the instructions cause the computing device or system to determine an actual scanning pattern of the energy beam by further processing data of a geometry of the object being processed by the apparatus.

In some embodiments, the instructions cause the scanner to scan the energy beam so as to produce an effective spot of the energy beam on a surface of an object to be processed by the apparatus, the effective energy spot featuring a two-dimensional energy distribution.

In some embodiments, the instructions cause the scanner to scan the energy beam such that each of a maximum angular coverage in a first direction and a maximum angular coverage in a second direction is greater than 0° and equal to or less than 45°, the first direction being perpendicular to the second direction. In some of these embodiments, the maximum angular coverage is equal to or less than 20°, and/or equal to or less than 10°, and/or equal to or less than 7°, and/or equal to or less than 5°, and/or equal to or less than 3°, and/or equal to or less than 1°.

A fourth aspect of the invention relates to a data stream which is representative of a computer program product according to the third aspect of the invention.

Similar advantages as those described with reference to the first and second aspects of the invention also apply to the third and fourth aspects of the invention.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 illustratively shows a system with an apparatus configured to provide an energy beam and intended to have the energy beam scanned according to a predetermined scanning pattern.
Figures 2A-2D illustratively show how the predetermined scanning pattern of Figure 1 changes as the energy beam is to be scanned.
Figure 3 illustratively shows the system of Figure 1 with its expected scanning pattern.
Figures 4A-4D illustratively show how the expected scanning pattern of Figure 3 changes as the predetermined scanning pattern of Figures 2A-2D changes.
Figure 5 illustratively shows differences between a predetermined scanning pattern and an expected scanning pattern.
Figures 6-8 illustratively show predetermined threshold areas according to the present disclosure.
Figure 9 illustratively shows a comparison between an actual scanning pattern and the predetermined threshold area of Figure 8.
Figure 10 diagrammatically shows a system in accordance with an embodiment.
Figures 11-12 diagrammatically show methods in accordance with embodiments.

### DESCRIPTION OF WAYS OF CARRYING OUT THE INVENTION

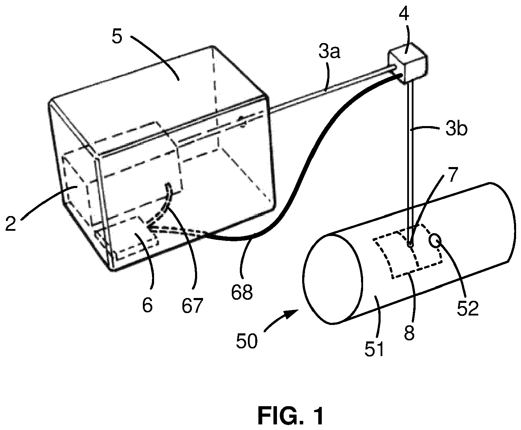

Figure 1 illustratively shows a system with an apparatus 2 intended to have the energy beam 3a, 3b thereof scanned according to a predetermined scanning pattern 8.

The system comprises: the apparatus for radiating a laser beam 2, the apparatus including a laser source (not illustrated) for providing the laser beam 3a; a scanner 4 with mirrors (not illustrated) for scanning the laser beam 3b on a surface 51 of an object 50, such as a cylindrical journal of a crankshaft having an oil lubrication hole 52; a computing device 6; and a housing 5 within which the apparatus 2 and the computing device 6 may be both included.

The computing device 6 operates the apparatus 2 so that it provides the laser beam 3a, and also operates the scanner 4 so that the mirrors thereof scan the laser beam 3b in the working area, and more particularly, on the surface 51 of the object 50 such that a laser spot 7 is thereon. The computing device 6 commands the scanner 4 to scan the laser beam 3b according to the predetermined scanning pattern 8 (shown with dashed lines for illustrative purposes only) that is or may be changed while the object 50 is processed. To this end, the computing device 6 is connected to apparatus 2, so as to be communicatively coupled therewith, and to the scanner 4, for instance with cables 67 and 68. In operation of the system, the laser apparatus 2 and the scanner 4 may move with respect to the object 50 to be processed, or the object 50 to be processed moves with respect to the laser apparatus 2 and the scanner 4.

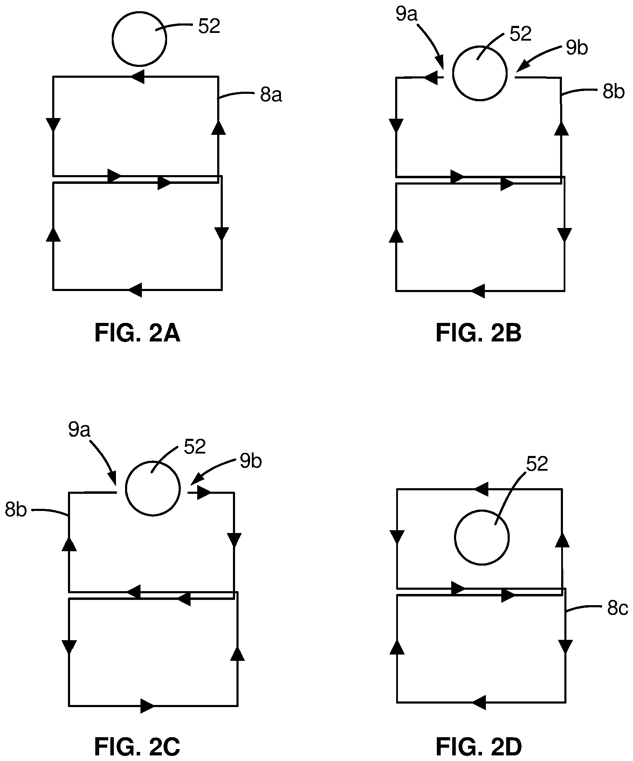

When the laser beam 3b is scanned at a high speed, such as, for example at a speed that repeats the predetermined scanning pattern 30 or more times per second, preferably 50 or more times, and even more preferably between 90 and 120 (both endpoints being included in the range) times per second, an effective laser spot is provided that makes possible to process the object 50 more accurately as the energy deposited on the object may be better controlled. Accordingly, even though the predetermined scanning pattern 8 is shown static, the entire surface 51 of the object 50 may be e.g. hardened with the apparatus 2 and, thus, the laser beam 3b is to be scanned according to the predetermined scanning pattern 8 at different parts of the surface 51, for instance by superimposing a movement to the predetermined scanning pattern 8 so as to have a predetermined scanning trajectory or by generating a relative movement between the object 50 and the apparatus 2 or the scanner 4. Further, the predetermined scanning pattern 8 may be changed while irradiating the different parts of the surface 51 so that the energy is deposited thereon as desired, as exemplarily illustrated in Figures 2A-2D.

Figures 2A-2D illustratively show, in two dimensions, how the predetermined scanning pattern 8 of Figure 1 changes as the laser beam is to be scanned. The arrows superimposed on the predetermined scanning pattern 8a-8c represent a direction in which the laser beam is to be scanned so as to follow the pattern; it is readily apparent that different directions for scanning the laser beam are possible within the scope of the present disclosure.

Figure 2A shows the first predetermined scanning pattern 8a commanded to the scanner 4 for scanning the laser beam 3b. The first scanning pattern 8a resembles the number eight in digital form (i.e. straight lines and sharp change of directions).

Figure 2B shows the second predetermined scanning pattern 8b commanded to the scanner 4 as the laser beam 3b could reach the oil lubrication hole 52 to the predetermined scanning trajectory. In order not to irradiate the oil lubrication hole 52, the second predetermined scanning pattern 8b has two endpoints 9a, 9b at which the laser beam is scanned so as to go backwards, as seen in Figure 2C in which when the laser beam reaches the second endpoint 9b, the laser beam is scanned in reverse direction until it reaches the first endpoint 9a, where it is reversed again, and so on and so forth.

As the laser beam advances owing to the predetermined scanning trajectory, the oil lubrication hole 52 falls within the third predetermined scanning pattern 8c, which is equal to the first predetermined scanning pattern 8a. The laser beam may be scanned without reversing the direction as occurred with the second predetermined scanning pattern 8b.

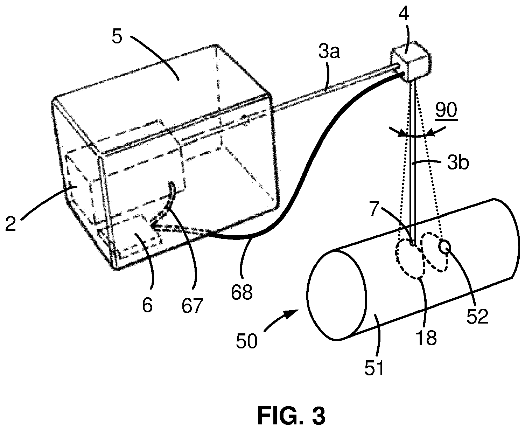

Figure 3 illustratively shows the system of Figure 1 with the laser beam 3a, 3b being scanned according to an expected scanning pattern 18.

Albeit the scanner 4 is commanded to scan the laser beam 3b according to the predetermined scanning pattern 8, which in this example changes as described with reference to Figures 2A-2D, the scanner 4 is unable to scan it accurately and, thus, the laser spot 7 may follow a pattern similar to the expected scanning pattern 18.

There are many factors that influence the capability of the scanner 4 to actually scan the laser beam 3b according to the desired scanning pattern (the predetermined scanning pattern 8 of Figures 1 and 2A-2D), such as the weight of the mirrors, the moment of inertia of the mirrors, the rotating speeds of the mirrors, and the maximum angular coverage (in both directions, only the maximum angular coverage 90 in one direction being represented with dotted lines for the sake of clarity) or maximum angular area coverage that the scanner 4 is configured to cover. Hence, the expected scanning pattern 18 features curvilinear lines and smooth corners.

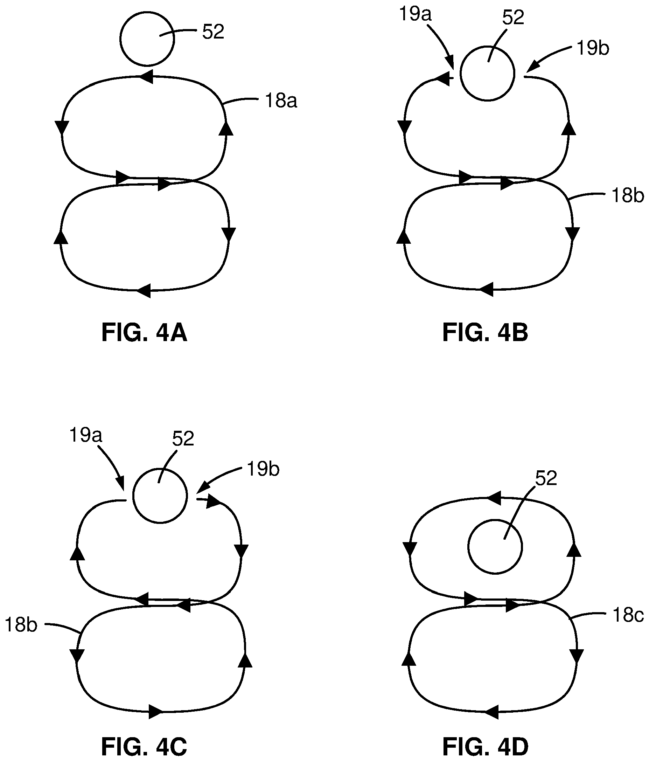

Figures 4A-4D illustratively show, in two dimensions, how the expected scanning pattern of Figure 3 changes as the predetermined scanning pattern 8a-8c of Figures 2A-2D changes.

The scanner 4 is commanded to scan according to the predetermined scanning patterns 8a-8c of Figures 2A-2D, however the laser spot 7 is expected to follow the pattern illustrated in Figures 4A-4D.

The first expected scanning pattern 18a, shown in Figure 4A, is a continuous pattern meanwhile the oil lubrication hole 52 is outside of it. The second expected scanning pattern 18b, shown in both Figures 4B-4C, makes the laser beam to stop at first and second endpoints 19a, 19b (so that oil lubrication hole 52 is not irradiated) and go in the reverse direction every time one of these endpoints 19a, 19b is reached. The third expected scanning pattern 18c is equal to the first expected scanning pattern 18a as illustrated in Figure 4D.

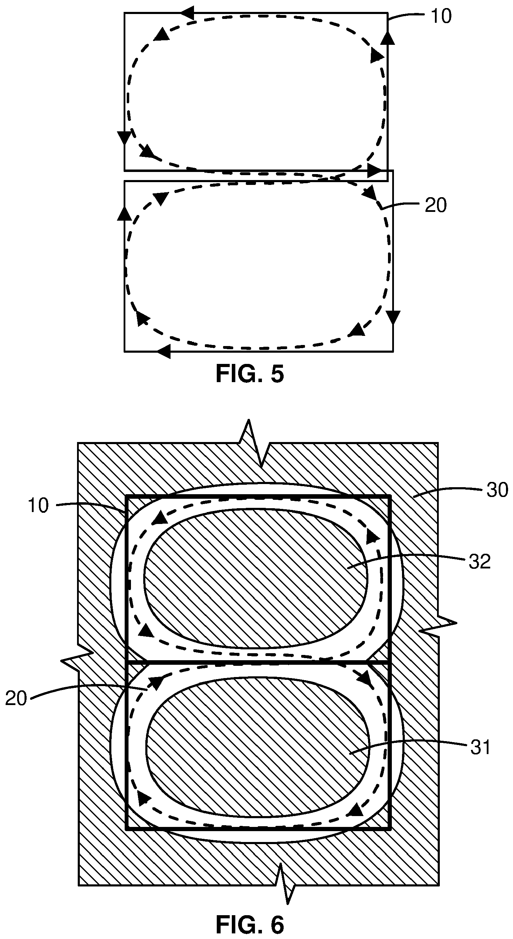

Figure 5 illustratively shows, in two dimensions, differences between a predetermined scanning pattern 10 and an expected scanning pattern 20.

As it can be appreciated, the expected scanning pattern 20 has curvilinear lines and rounded corners whereas the predetermined scanning pattern 10, according to which the scanner is operated, has straight lines and sharp corners forming 90° angles.

The arrows superimposed on the predetermined scanning pattern 10 and the expected scanning pattern 20 represent a direction in which the laser beam is to be scanned so as to follow the pattern. It is readily apparent that different directions for scanning the laser beam are possible within the scope of the present disclosure.

Figure 6 illustratively shows, in two dimensions, a predetermined threshold area 30-32 according to the present disclosure.

The predetermined threshold area 30-32 is illustrated superimposed on the predetermined scanning pattern 10 and the expected scanning pattern 20 for the sake of clarity only. The predetermined threshold area 30-32 comprises a plurality of areas that are not connected one to each other. The predetermined threshold area may be defined in a number of ways. For example, each area of the plurality of areas may be defined based on the predetermined scanning pattern 10, or more preferably based on the expected scanning pattern 20 since the pattern that the laser beam is expected to follow is generally regarded as the normal operation of the scanner; in the latter case, if the expected scanning pattern 20 is defined by statistically determining the likeliness with which the laser beam deviates when scanned according to the predetermined scanning pattern 10, the predetermined threshold area 30-32 may be defined for scanning deviations that amount to less than a certain value, for example less than 20%, or less than 10%, or less than 5% of a Gaussian distribution of the scanned laser beam. The predetermined threshold area 30-32 may be made larger or smaller depending on the allowed or tolerated margin of error of the scan, accordingly the determination that the scan of the laser beam is anomalous will allow more or less error.

The actual scanning pattern, that is, the pattern that the laser beam actually follows is compared with the predetermined threshold area 30-32. In this case, it is desirable that the actual scanning pattern or at least part thereof (preferably, a majority of the actual scanning pattern) is outside of the predetermined threshold area 30-32 because the predetermined threshold area represents excessive deviation of the actual scanning pattern.

If the actual scanning pattern coincides with the expected scanning pattern 20, which hardly ever happens, no part of the actual scanning pattern falls within the predetermined threshold area 30-32. This means that in order to determine that a scan of a laser beam is anomalous, instantaneous determinations (i.e. it is enough that, according to at least one processed measurement, the actual scanning pattern is within the predetermined threshold area 30-32 at one time instant to determine that the scan is anomalous) or ranged determinations (i.e. the actual scanning pattern is within the predetermined threshold area 30-32 at a plurality of time instants, according to a plurality of measurements, to determine that the scan is anomalous) may be carried out.

Ranged determinations are generally preferred since occasional errors in the scan may occur without existing a problem in the scanner that would result in further errors, or that would result in frequent or continuous anomalous scans. Depending on the number of occasional errors over a period of time or over a range of comparisons, or depending on the percent of occasional errors with respect to a range of comparisons (e.g. at least 3% of the comparisons of a range of comparisons being inside or outside of the predetermined threshold area, in this case inside of the predetermined threshold area; other exemplary values may be, e.g. at least 5%, at least 7%, at least 10%, etc.), it may be indicated that the object is not correctly processed yet the laser apparatus and the scanner are not stopped so that further objects may be processed.

In these and in other embodiments, the range of comparisons may include: a number of comparisons within a scanning trajectory (which may include a single scanning pattern, a number of repetitions of a scanning pattern, a plurality of scanning patterns, etc.), a number of comparisons in one single scanning pattern, a number of comparisons in a number of scanning pattern repetitions, etc. Preferably, the number of comparisons comprises a number of consecutive comparisons, that is, comparisons of consecutive points of the actual scanning trajectory with the predetermined threshold area.

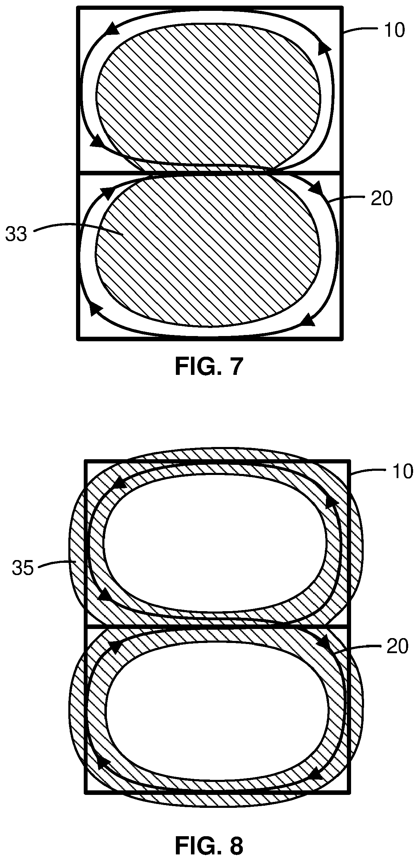

Figure 7 illustratively shows, in two dimensions, a predetermined threshold area 33 according to the present disclosure.

The predetermined threshold area 33 is illustrated superimposed on the predetermined scanning pattern 10 and the expected scanning pattern 20 for the sake of clarity only. The predetermined threshold area 33 may be defined in a number of ways. For example, it may be defined based on the predetermined scanning pattern 10, or more preferably based on the expected scanning pattern 20. The predetermined threshold area 33 may be made larger or smaller depending on the allowed or tolerated margin of error of the scan.

The actual scanning pattern is compared with the predetermined threshold area 33. In this case, it is desirable that at least part of the actual scanning pattern (preferably, a majority of the actual scanning pattern) is outside of the predetermined threshold area 33 because the predetermined threshold area represents excessive deviation of the actual scanning pattern.

In this case, however, the predetermined threshold area 33 comprises area in the center overlapping both the predetermined scanning pattern 10 and the expected scanning pattern 20 (in other examples it could overlap only one of these, for example the predetermined scanning pattern 10). It is expected and desired (according to the predetermined scanning pattern 10) that the laser spot of the laser beam irradiates a surface of an object in this center-most area.

In order to determine that a scan of a laser beam is anomalous, it is carried out a ranged determination because at some time instants the laser spot is expected to be within the predetermined threshold area 33. Accordingly, it is determined that the scan is anomalous if a number of comparisons or a percent of comparisons (with respect to a range of comparisons) of the actual scanning pattern and the predetermined threshold area 33 exceeds a predetermined threshold value.

The predetermined threshold value may be established based upon a frequency with which encoders of the mirrors of the scanner provide measurements to the computing device or system carrying out the comparisons and determinations of whether the scan is anomalous, and also based upon the number of commanded repetitions of the predetermined scanning pattern 10 per second (something which influences the rotating speeds of the mirrors of the scanner). From the frequency and the number of commanded repetitions it can be determined how many comparisons may be carried out per repetition, and how many times the actual scanning pattern will be expected to be within the predetermined threshold area 33 due to the overlap between said area 33 and the expected scanning pattern 20. Therefore, the predetermined threshold value should be greater than the number of times the actual scanning pattern will be expected to be within the predetermined threshold area 33 so as to determine a possibly anomalous scan.

In comparison with the predetermined threshold area 30-32 of Figure 6, the predetermined threshold area 33 of Figure 7 may be less preferable because it lacks an area at the outer-most part of the expected scanning pattern 20 (such as the area 30 of Figure 6). Such area at the outer-most part is convenient for determining that a scan entailing a greater risk for the safety of people is anomalous, mainly because a laser beam being aimed at said outer-most part may be aimed further away from the expected scanning pattern 20 and, therefore, out from the working area.

In some other embodiments, the predetermined threshold area only comprises area at the outer-most part of the expected scanning pattern 20 (such as the area 30 of Figure 6). Also, in some other embodiments, the predetermined threshold area may be provided as the areas 31, 32 of Figure 6 that do not overlap the expected scanning pattern 20 and/or the predetermined scanning pattern 10. In such embodiments, the determination that a scan of a laser beam is anomalous may be carried out either as instantaneous determinations (because the expected scanning pattern 20 does not overlap the area 30, or the areas 31, 32 forming the predetermined threshold area) or as ranged determinations.

Figure 8 illustratively shows, in two dimensions, a predetermined threshold area 35 according to the present disclosure.

The predetermined threshold area 35 is illustrated superimposed on the predetermined scanning pattern 10 and the expected scanning pattern 20 for the sake of clarity only. The predetermined threshold area 35 may be defined in a number of ways. For example, it may be defined based on the predetermined scanning pattern 10, or more preferably based on the expected scanning pattern 20. The predetermined threshold area 35 may be made larger or smaller depending on the allowed or tolerated margin of error of the scan.

The actual scanning pattern is compared with the predetermined threshold area 35. In this case, it is desirable that the actual scanning pattern or at least part thereof (preferably, a majority of the actual scanning pattern) is inside of the predetermined threshold area 35 because the predetermined threshold area represents lack of deviation of the actual scanning pattern.

The determination that a scan of a laser beam is anomalous is carried out either as instantaneous determinations or as ranged determinations, depending on which one or more than one comparison should be outside of the predetermined threshold area 35 to determine that the actual scanning pattern has deviated and, therefore, the scan may be anomalous.

When the predetermined scanning pattern and the expected scanning pattern changes during the processing of objects, for instance as described with reference to Figures 2A-2D and 4A-4D, the predetermined threshold areas also change so that the comparison between the actual scanning pattern and the predetermined threshold area corresponds. By way of example, if the second predetermined scanning pattern 8b and the second expected scanning pattern 18b are considered, the predetermined threshold area will be influenced by the endpoints 9a, 9b, 19a, 19b and, thus, the actual scanning pattern during that part of the processing will have to be outside of the predetermined threshold area (if the area is defined as in Figures 6-7) or inside of the predetermined threshold area (if the area is defined as in Figure 8) with regards to the position of the oil lubrication hole 52.

Even though the expected scanning pattern 20 has been represented as a line, the same may be in some cases represented as a line having a thickness (thus, having an area) which illustrates where the spot of the energy beam is expected to be when the expected scanning pattern 20 is defined by means of a statistical determination. The thickness may be selected based, for example, on the standard deviation of a normal distribution.

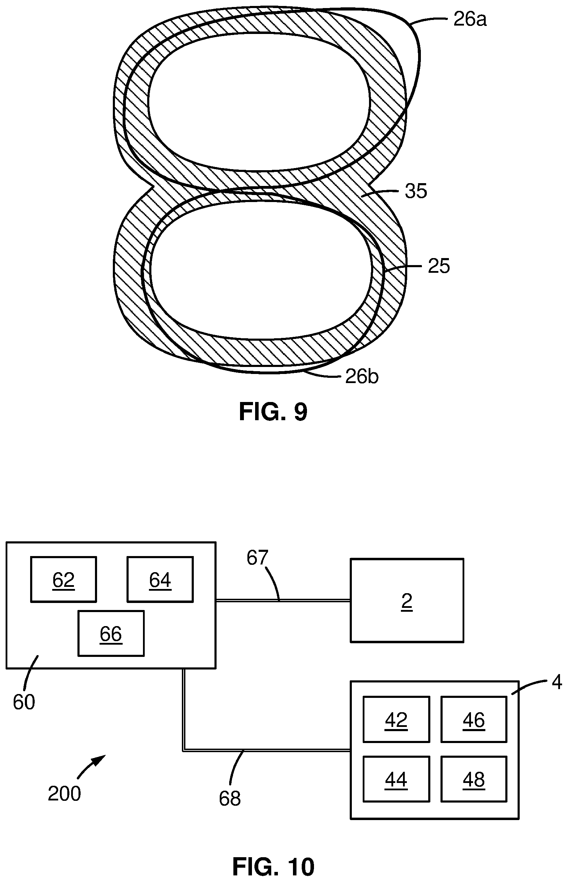

Figure 9 illustratively shows, in two dimensions, a comparison between an actual scanning pattern 25 and the predetermined threshold area 35 of Figure 8.

The encoders of the mirrors of the scanner sense the absolute position of the mirrors within the scanner, the angle of the mirrors, or the movement of the mirrors. The values sensed are then processed by a computing device or system for determining the actual scanning pattern 25 of a laser beam. The actual scanning pattern 25 is then compared with the predetermined threshold area 35 to determine whether the scan is anomalous.

As it may be observed in Figure 9, there are two portions 26a, 26b of the actual scanning pattern 25 that fall outside from the predetermined threshold area 35. Depending on the criteria for determining that the scan is anomalous (e.g. number of points or percent of points outside from the predetermined threshold area 35), the existence of such two portions 26a, 26b may result in the determination that the scan is in fact anomalous, or that it is not anomalous (i.e. a greater percent or number of points must be out from the predetermined threshold area 35). Accordingly, if it is established that one or two points are enough to determine that the scan is anomalous, in the example of Figure 9 it would be determined that the scan is in fact anomalous; if it is more than two points, depending on the number of points in the portions 26a, 26b the same determination could be made.

Even though the actual scanning pattern 25 illustrated is shown as a continuous line, it is readily apparent that the measurements provided by the encoders are discrete, thus the actual scanning pattern 25 determined by the computing device or system is a cloud of discrete points rather than a continuous line. Each point of the cloud of points may be compared with the predetermined threshold area 35. The computing device or system may, in some embodiments, connect consecutive discrete points to provide a continuous actual scanning pattern 25 in order to make the comparison, however this is normally not necessary.

Figure 10 diagrammatically shows a system 200 in accordance with an embodiment.

The system 200 comprises a computing device or system 60, a laser apparatus 2 with a laser source (not illustrated) for providing a laser beam with a power over e.g. 1 kW, for instance 2 kW, 3 kW, 5 kW, etc. and less than e.g. 20 kW, such as 15 kW or 10 kW, and a scanner 4. The computing device or system 60 is connected to the laser apparatus 2 and the scanner 4, for example with means such as cables 67, 68, or through a programmable logic controller in turn connected to the laser apparatus 2 and/or the scanner 4, or with Ethernet connections through a switch or router, etc.

According to the present invention, the scanner 4 comprises a first mirror 42, a second mirror 44, at least a first encoder 46 that senses and provides measures of the first mirror 42, and at least a second encoder 48 that senses and provides measures of the second mirror 44. The first and second mirrors 42, 44 scan the laser beam provided by the laser apparatus according to scanning patterns or trajectories.

The computing device or system 60 comprises at least one processor 62, at least one memory 64, and means 66 for transmitting and receiving data. The computing device or system 60 may comprise input means and user interfaces that enable an operator to adjust and control the operation of the computing device or system 60, something which may also be carried out remotely by transmitting data to and receiving data from the computing device or system 60 through the means 66.

The at least one processor 62, together with the at least one memory 64 and the means 66, processes measurements provided by the at least first and second encoders 46, 48 so as to determine the actual scanning pattern of the laser beam as scanned, compares the actual scanning pattern with a predetermined threshold area (that may include a plurality of areas not connected one to each other), and determines whether the scan is anomalous. Further, the at least one processor 62 may operate the laser apparatus 2 and/or the scanner 4 so as to change the laser beam provided, e.g. the power thereof, the diameter of the laser spot, etc. and/or the scan of the laser beam, e.g. the predetermined scanning pattern, the rotating speeds of the mirrors, etc.

In the present disclosure, the computing device or system 60 may be a single device, i.e. a computing device; or it may be a plurality of computing devices that are communicatively coupled, i.e. a computing system, each of which carries out one or more computing operations, or all computing devices carry out one or more computing operations in a distributed manner.

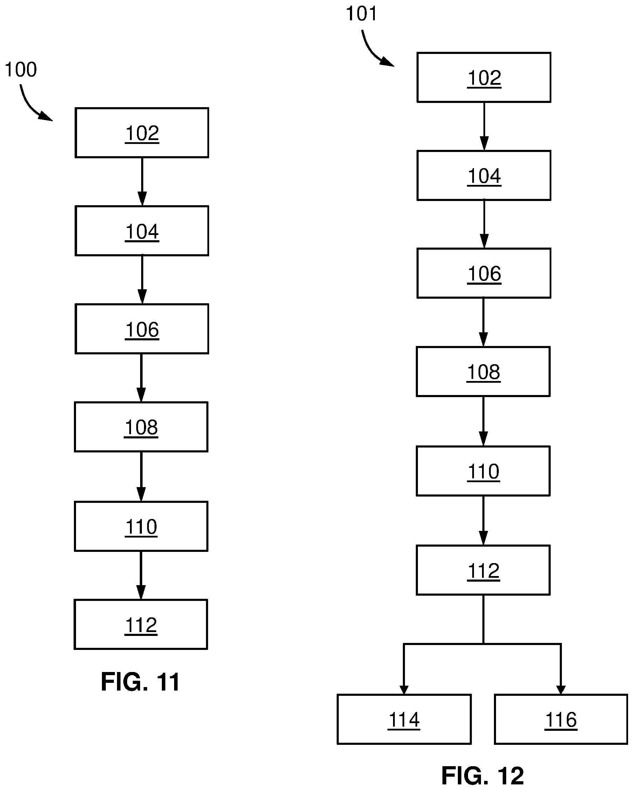

Figure 11 diagrammatically shows a method 100 in accordance with an embodiment.

The method 100 comprises a step of providing 102 an apparatus (for example, the apparatus 2 of Figures 1, 3, 10) configured to provide an energy beam, e.g. a laser beam, that is to be scanned with a scanner. The method 100 further comprises a step of providing 104 a scanner (for example, the scanner 4 of Figures 1, 3, 10) configured to scan the energy beam provided by the apparatus.

The method 100 further comprises a step of operating 106 the apparatus and the scanner such that the energy beam is provided while it is scanned according to a predetermined scanning pattern. In some embodiments, this step is carried out by at least one processor of a computing device or system (for example, the computing device 6 of Figures 1, 3 or the computing device or system 60 of Figure 10).

The method 100 further comprises a step of determining 108 an actual scanning pattern (for example, the actual scanning pattern 25 of Figure 9) of the energy beam, when both the apparatus and the scanner are operated, by processing measurements provided by encoders of a first mirror and a second mirror of the scanner. This step is carried out by the at least one processor of the computing device or system.

The method 100 further comprises a step of comparing 110 the actual scanning pattern with a predetermined threshold area (for example, any of the predetermined threshold areas 30-33, 35 of Figures 6-9). This step is carried out by the at least one processor of the computing device or system.

The method 100 may further comprise a step of determining 112 that the scan of the energy beam is anomalous if at least part of the actual scanning pattern is inside or outside of the predetermined threshold area. This step is carried out by the at least one processor of the computing device or system.

Figure 12 diagrammatically shows a method 101 in accordance with an embodiment.

The method 101 comprises the same steps of method 100 of Figure 11, and further comprises one or both of the following steps: indicating 114, if it is determined 112 that the scan of the energy beam is anomalous, that an object that was processed by the apparatus is incorrectly processed; and stopping 116 the apparatus for emitting an energy beam if it is determined 112 that the scan of the energy beam is anomalous. In some embodiments, these steps may be carried out by the at least one processor of the computing device or system.

In some embodiments, the method comprises: obtaining data indicative of the actual scanning pattern being different from the predetermined scanning pattern, and modifying the predetermined scanning pattern based on said data. This may involve reprogramming, thus optimizing, the system based on the data indicative of the actual scanning pattern, for example by instructing the scanner to operate more in accordance with the actual scanning pattern, that is to say, by providing to the scanner new instructions that better correspond to the actual operation of the scanner than original instructions.

The data indicative of the actual scanning pattern can, for example, comprise data originating from encoders of the scanner 4, for example, encoders indicative of the real movements of the mirrors or similar of the scanner. Thus, once the real movement followed by the mirrors is detected, the corresponding data can be used to optimize the operation of the scanner 4 so as to operate not according to the predetermined scanning pattern 10, but according to the actual scanning pattern, or according to a more or less similar scanning pattern. Thus, the system including the scanner 4 can end up being programmed in a manner that better reflects the actual operation of the scanner 4. Thereby, the scanner can be subjected to less operational stress when operated. This serves to minimize the risk of damage to the scanner 4 or to operational failures of the type that tend to appear when a scanner 4 is operated at its operational limits, for example, forced to follow a scanning pattern including abrupt changes at a high speed. The steps of obtaining data indicative of the actual scanning pattern being different from the predetermined scanning pattern, and modifying the predetermined scanning pattern based on the data indicative of the actual scanning pattern, can be repeated several times, such as as often as deemed possible, until a desired conformity between the programmed (predetermined) scanning pattern and the actual scanning pattern followed by the energy beam has been reached, so as to ensure that the system with scanner ends up being programmed in a manner that substantially coincides with its actual operation, thereby minimizing the operational stresses. Albeit embodiments have been described in which laser beams are scanned according to an exemplary predetermined scanning pattern, it is readily apparent that laser beams may be scanned according to other different scanning patterns and which also fall within the scope of the present disclosure. By way of example, upon determining an expected scanning pattern as herein disclosed when the scanner scans an energy beam according to a predetermined scanning pattern, the scanner may be commanded to scan an energy beam with a predetermined scanning pattern defined on the basis of the determined expected scanning pattern; accordingly, the scanner can be subjected to less operational stress when operated yet an expected scanning pattern and one or more predetermined threshold areas are then determined for the operation of the machine as herein disclosed.

In this text, the terms "actual scanning pattern" and "actual scanning trajectory" refer to the scanning pattern and the scanning trajectory, respectively, as determined based on the processed measurements. Therefore, errors in the processing made result in the determination of a scanning pattern and a scanning trajectory different from the actually followed by the laser beam and the laser spot thereof, as it will be readily apparent to the person skilled in the art. Accordingly, these terms could as well be referred to as, for example but without limitation, "determined scanning pattern" and "determined scanning trajectory", respectively.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the appended claims.

## Claims

1. A method for supervision of a scan of an energy beam, comprising:
providing (102) an apparatus (2) configured to provide the energy beam;
providing (104) a scanner (4) configured to scan the energy beam, the scanner (4) comprising a first mirror (42) and a second mirror (44), and each mirror comprising at least one encoder (46, 48), and
operating (106) the apparatus (2) and the scanner (4) such that the energy beam is provided while it is scanned according to a predetermined scanning pattern (10);
**characterized in that** the method further comprises:
determining (108), by at least one processor of a computer device or system (6), an actual scanning pattern of the energy beam, while both the apparatus (2) and the scanner (4) are operated, by processing measurements provided by encoders of the first mirror and the second mirror;
comparing (110), by the at least one processor, the actual scanning pattern with a predetermined threshold area (30-33, 35); and
determining (112), by the at least one processor, whether the scan of the energy beam is anomalous based on the comparison (110).

2. The method of claim 1, wherein the predetermined threshold area (35) or a majority thereof does not comprise an expected scanning pattern; and determining (112) whether the scan of the energy beam is anomalous comprises determining that the scan is anomalous when at least part of the actual scanning pattern is outside of the predetermined threshold area (35).

3. The method of claim 1, wherein the predetermined threshold area (30-33) comprises an expected scanning pattern; and determining (112) whether the scan of the energy beam is anomalous comprises determining that the scan is anomalous when at least part of the actual scanning pattern is inside of the predetermined threshold area (30-33).

4. The method of any one of the preceding claims, further comprising: indicating (114), when it is determined (112) that the scan of the energy beam is anomalous, that an object that was processed by the apparatus (2) is incorrectly processed; and/or stopping (116) the apparatus (2) when it is determined (112) that the scan of the energy beam is anomalous.

5. The method of any one of the preceding claims, wherein the encoders of the first mirror and the second mirror provide the measurements with a frequency equal to or greater than 10 kHz.

6. The method of any one of the preceding claims, wherein the scanner (4) is operated such that each of a maximum angular coverage in a first direction and a maximum angular coverage in a second direction is greater than 0° and equal to or less than 20°, the first direction being perpendicular to the second direction, preferably each maximum angular coverage is equal to or less than 5° or 1°.

7. The method of any one of the preceding claims, further comprising:
obtaining data indicative of the actual scanning pattern being different from the predetermined scanning pattern;
modifying the predetermined scanning pattern based on the data indicative of the actual scanning pattern.

8. A system for supervision of a scan of an energy beam, comprising:
an apparatus (2) configured to provide the energy beam;
a scanner (4) configured to scan the energy beam, the scanner (4) comprising a first mirror (42) and a second mirror (44), each mirror comprising at least one encoder (46, 48), the scanner (4) and the apparatus (2) being configured to provide the energy beam while it is scanned according to a predetermined scanning pattern (10); and
a computing device or system (6) comprising at least one processor;
**characterized in that**:
the at least one processor is configured to:
determine (108) an actual scanning pattern of the energy beam, when both the apparatus (2) and the scanner (4) are operated, by processing measurements provided by the encoders of the first mirror and the second mirror;
compare (110) the actual scanning pattern with a predetermined threshold area (30-33, 35); and
determine (112) whether the scan of the energy beam is anomalous based on the comparison (110).

9. The system of claim 8, wherein the predetermined threshold area (35) or a majority thereof does not comprise an expected scanning pattern; and wherein the at least one processor is configured to determine (112) whether the scan of the energy beam is anomalous by determining that it is anomalous when at least part of the actual scanning pattern is outside of the predetermined threshold area (35).

10. The system of claim 8, wherein the predetermined threshold area (30-33) comprises an expected scanning pattern; and wherein the at least one processor is configured to determine (112) whether the scan of the energy beam is anomalous by determining that it is anomalous when at least part of the actual scanning pattern is inside of the predetermined threshold area (30-33).

11. The system of any one of claims 8-10, wherein the at least one processor is further configured: to indicate (114), when it determines (112) that the scan of the energy beam is anomalous, that an object that was processed by the apparatus is incorrectly processed; and/or to stop (116) the apparatus (2) when it determines (112) that the scan of the energy beam is anomalous.

12. The system of any one of claims 8-11, wherein the encoders of the first mirror and the second mirror are configured to provide the measurements with a frequency equal to or greater than 10 kHz.

13. The system of any one of claims 8-12, wherein the at least one processor is further configured to obtain data indicative of the actual scanning pattern being different from the predetermined scanning pattern; and to modify the predetermined scanning pattern based on the data indicative of the actual scanning pattern.

14. The system of any one of claims 8-13, wherein the scanner (4) is operated such that each of a maximum angular coverage in a first direction and a maximum angular coverage in a second direction is greater than 0° and equal to or less than 20°, the first direction being perpendicular to the second direction, preferably each maximum angular coverage is equal to or less than 5° or 1°.

15. A computer program product **characterized in that** it has instructions which, when executed by the at least one processor of the computing device or system (6) of the system of one of the claims 8-14, cause the processor to perform the steps of:
operating an apparatus and a scanner such that an energy beam thereof is provided while it is scanned with the scanner according to a predetermined scanning pattern;
determining an actual scanning pattern of the energy beam, when both the apparatus and the scanner are operated, by processing measurements provided by encoders of a first mirror and a second mirror of the scanner;
comparing the actual scanning pattern with a predetermined threshold area;
determining whether a scan of the energy beam is anomalous based on the comparison.

## Patentansprüche

1. Verfahren zum Überwachen einer Abtastung eines Energiestrahls, mit den folgenden Schritten:
Bereitstellen (102) einer Vorrichtung (2), die so konfiguriert ist, dass sie den Energiestrahl bereitstellt;
Bereitstellen (104) eines Scanners (4), der so konfiguriert ist, dass er den Energiestrahl abtastet, wobei der Scanner (4) einen ersten Spiegel (42) und einen zweiten Spiegel (44) umfasst und jeder Spiegel mindestens einen Codierer (46, 48) umfasst; und
Betreiben (106) der Vorrichtung (2) und des Scanners (4) derart, dass der Energiestrahl bereitgestellt wird, während er gemäß einem vorbestimmten Abtastmuster (10) abgetastet wird;
**dadurch gekennzeichnet, dass** das Verfahren ferner umfasst:
Bestimmen (108) eines aktuellen Abtastmusters des Energiestrahls durch mindestens einen Prozessor einer Computervorrichtung oder eines Systems (6), während sowohl die Vorrichtung (2) als auch der Scanner (4) betrieben werden, durch Verarbeiten von Messungen, die von Kodierern des ersten Spiegels und des zweiten Spiegels bereitgestellt werden;
Vergleichen (110) des aktuellen Abtastmusters mit einem vorbestimmten Schwellenbereich (30-33, 35) durch den mindestens einen Prozessor; und
Bestimmen (112), durch den mindestens einen Prozessor, ob die Abtastung des Energiestrahls basierend auf dem Vergleich (110) anomal ist.

2. Verfahren nach Anspruch 1, wobei der vorbestimmte Schwellenbereich (35) oder ein Großteil davon kein erwartetes Abtastmuster umfasst; und wobei das Bestimmen (112), ob die Abtastung des Energiestrahls anomal ist, das Bestimmen umfasst, dass die Abtastung anomal ist, wenn mindestens ein Teil des aktuellen Abtastmusters außerhalb des vorbestimmten Schwellenbereichs (35) liegt.

3. Verfahren nach Anspruch 1, wobei der vorbestimmte Schwellenbereich (30-33) ein erwartetes Abtastmuster umfasst; und wobei das Bestimmen (112), ob die Abtastung des Energiestrahls anomal ist, das Bestimmen umfasst, dass die Abtastung anomal ist, wenn mindestens ein Teil des aktuellen Abtastmusters innerhalb des vorbestimmten Schwellenbereichs (30-33) liegt.

4. Verfahren nach einem der vorhergehenden Ansprüche, ferner umfassend: Anzeigen (114), wenn festgestellt wird (112), dass die Abtastung des Energiestrahls anomal ist, dass ein Objekt, das von der Vorrichtung (2) verarbeitet wurde, nicht korrekt verarbeitet wurde; und/oder Anhalten (116) der Vorrichtung (2), wenn festgestellt wird (112), dass die Abtastung des Energiestrahls anomal ist.

5. Verfahren nach einem der vorhergehenden Ansprüche, wobei die Encoder des ersten Spiegels und des zweiten Spiegels die Messungen mit einer Frequenz gleich oder größer als 10 kHz liefern.

6. Verfahren nach einem der vorhergehenden Ansprüche, wobei der Scanner (4) so betrieben wird, dass sowohl ein maximaler Winkelüberdeckungsbereich in einer ersten Richtung als auch ein maximaler Winkelüberdeckungsbereich in einer zweiten Richtung größer als 0° und gleich oder kleiner als 20° ist, wobei die erste Richtung senkrecht zur zweiten Richtung verläuft, vorzugsweise jeder maximale Winkelüberdeckungsbereich gleich oder kleiner als 5° oder 1° ist.

7. Verfahren nach einem der vorhergehenden Ansprüche, ferner umfassend:
Erhalten von Daten, die indikativ dafür sind, dass sich das aktuelle Abtastmuster von dem vorbestimmten Abtastmuster unterscheidet;
Modifizieren des vorbestimmten Abtastmusters auf der Grundlage der Daten, die indikativ für das aktuelle Abtastmuster sind.

8. System zur Überwachung einer Abtastung eines Energiestrahls, Folgendes umfassend:
eine Vorrichtung (2), die so konfiguriert ist, dass sie den Energiestrahl bereitstellt;
einen Scanner (4), der so konfiguriert ist, dass er den Energiestrahl abtastet, wobei der Scanner (4) einen ersten Spiegel (42) und einen zweiten Spiegel (44) umfasst, wobei jeder Spiegel mindestens einen Codierer (46, 48) umfasst,
wobei der Scanner (4) und die Vorrichtung (2) so konfiguriert sind, dass sie den Energiestrahl bereitstellen, während dieser gemäß einem vorbestimmten Abtastmuster (10) abgetastet wird; und
eine Computervorrichtung oder ein System (6), das mindestens einen Prozessor umfasst;
**dadurch gekennzeichnet, dass**:
der mindestens eine Prozessor konfiguriert ist, um:
ein aktuelles Abtastmuster des Energiestrahls zu bestimmen (108), wenn sowohl die Vorrichtung (2) als auch der Scanner (4) betrieben werden, durch Verarbeiten von Messungen, die von den Kodierern des ersten Spiegels und des zweiten Spiegels bereitgestellt werden;
das aktuelle Abtastmuster mit einem vorbestimmten Schwellenbereich (30-33, 35) zu vergleichen (110); und
basierend auf dem Vergleich (110) zu bestimmen (112), ob die Abtastung des Energiestrahls anomal ist.

9. System nach Anspruch 8, wobei der vorbestimmte Schwellenbereich (35) oder ein Großteil davon kein erwartetes Abtastmuster umfasst; und wobei der mindestens eine Prozessor so konfiguriert ist, dass er bestimmt (112), ob die Abtastung des Energiestrahls anomal ist, indem er bestimmt, dass sie anomal ist, wenn mindestens ein Teil des aktuellen Abtastmusters außerhalb des vorbestimmten Schwellenbereichs (35) liegt.

10. System nach Anspruch 8, wobei der vorbestimmte Schwellenbereich (30-33) ein erwartetes Abtastmuster umfasst; und wobei der mindestens eine Prozessor so konfiguriert ist, dass er bestimmt (112), ob die Abtastung des Energiestrahls anomal ist, indem er bestimmt, dass sie anomal ist, wenn mindestens ein Teil des aktuellen Abtastmusters innerhalb des vorbestimmten Schwellenbereichs (30-33) liegt.

11. System nach einem der Ansprüche 8-10, wobei der mindestens eine Prozessor ferner so konfiguriert ist, dass er, wenn er feststellt (112), dass die Abtastung des Energiestrahls anomal ist, anzeigt (114), dass ein Objekt, das von der Vorrichtung verarbeitet wurde, nicht korrekt verarbeitet wurde; und/oder dass er die Vorrichtung (2) anhält (116), wenn er feststellt (112), dass die Abtastung des Energiestrahls anomal ist.

12. System nach einem der Ansprüche 8 bis 11, wobei die Encoder des ersten Spiegels und des zweiten Spiegels so konfiguriert sind, dass sie die Messungen mit einer Frequenz von 10 kHz oder mehr liefern.

13. System nach einem der Ansprüche 8 bis 12, wobei der mindestens eine Prozessor ferner so konfiguriert ist, dass er Daten erhält, die indikativ dafür sind, dass sich das aktuelle Abtastmuster von dem vorbestimmten Abtastmuster unterscheidet; und dass er das borbestimmte Abtastmuster auf der Grundlage der Daten modifiziert, die indikativ für das aktuelle Abtastmuster sind.

14. System nach einem der Ansprüche 8 bis 13, wobei der Scanner (4) so betrieben wird, dass sowohl der maximale Winkelabdeckungsbereich in einer ersten Richtung als auch der maximale Winkelabdeckungsbereich in einer zweiten Richtung größer als 0° und gleich oder kleiner als 20° ist, wobei die erste Richtung senkrecht zur zweiten Richtung verläuft, und vorzugsweise jeder maximale Winkelabdeckungsbereich gleich oder kleiner als 5° oder 1° ist.

15. Computerprogrammprodukt, **dadurch gekennzeichnet, dass** es Befehle aufweist, die, wenn sie von dem mindestens einen Prozessor der Computervorrichtung oder von dem System (6) des Systems nach einem der Ansprüche 8-14 ausgeführt werden, den Prozessor veranlassen, die folgenden Schritte auszuführen:
Betreiben einer Vorrichtung und eines Scanners derart, dass ein Energiestrahl bereitgestellt wird, während dieser mit dem Scanner gemäß einem vorbestimmten Abtastmuster abgetastet wird;
Bestimmen eines aktuellen Abtastmusters des Energiestrahls, wenn sowohl die Vorrichtung als auch der Scanner betrieben werden, durch Verarbeiten von Messungen, die von Kodierern eines ersten Spiegels und eines zweiten Spiegels des Scanners bereitgestellt werden;
Vergleichen des aktuellen Abtastmusters mit einem vorbestimmten Schwellenbereich;
Bestimmen basierend auf dem Vergleich, ob ein Abtasten des Energiestrahls anomal ist.

## Revendications

1. Procédé de supervision d'un balayage d'un faisceau d'énergie, comprenant les étapes consistant à :
fournir (102) un appareil (2) configuré pour fournir le faisceau d'énergie ;
fournir (104) un scanner (4) configuré pour balayer le faisceau d'énergie, le scanner (4) comprenant un premier miroir (42) et un deuxième miroir (44), et chaque miroir comprenant au moins un codeur (46, 48), et
faire fonctionner (106) l'appareil (2) et le scanner (4) de sorte que le faisceau d'énergie est fourni pendant qu'il est balayé selon un motif de balayage prédéterminé (10) ;
**caractérisé en ce que** le procédé comprend en outre les étapes consistant à :
déterminer (108), à l'aide d'au moins un processeur d'un dispositif ou système informatique (6), un motif de balayage réel du faisceau d'énergie, alors que l'appareil (2) et le scanner (4) fonctionnent, en traitant des mesures fournies par les codeurs du premier miroir et du deuxième miroir ;
comparer (110), à l'aide dudit au moins un processeur, le motif de balayage réel avec une zone de seuil prédéterminée (30-33, 35) ; et
déterminer (112), à l'aide dudit au moins un processeur et sur la base de la comparaison (110), si le balayage du faisceau d'énergie est anormal.

2. Procédé selon la revendication 1, dans lequel la zone de seuil prédéterminée (35) ou une majorité de celle-ci ne comprend pas un motif de balayage attendu ; et l'étape consistant à déterminer (112) si le balayage du faisceau d'énergie est anormal comprend l'étape consistant à déterminer que le balayage est anormal lorsqu'au moins une partie du motif de balayage réel est à l'extérieur de la zone de seuil prédéterminée (35).

3. Procédé selon la revendication 1, dans lequel la zone de seuil prédéterminée (30-33) comprend un motif de balayage attendu ; et l'étape consistant à déterminer (112) si le balayage du faisceau d'énergie est anormal comprend l'étape consistant à déterminer que le balayage est anormal lorsqu'au moins une partie du motif de balayage réel est à l'intérieur de la zone de seuil prédéterminée (30-33).

4. Procédé selon l'une quelconque des revendications précédentes, comprenant en outre les étapes consistant à : indiquer (114), lorsqu'il est déterminé (112) que le balayage du faisceau d'énergie est anormal, qu'un objet qui a été traité par l'appareil (2) est incorrectement traité ; et/ou arrêter (116) l'appareil (2) lorsqu'il est déterminé (112) que le balayage du faisceau d'énergie est anormal.

5. Procédé selon l'une quelconque des revendications précédentes, dans lequel les encodeurs du premier miroir et du deuxième miroir fournissent les mesures avec une fréquence égale ou supérieure à 10 kHz.

6. Procédé selon l'une quelconque des revendications précédentes, dans lequel le scanner (4) est utilisé de telle sorte que chacune d'une couverture angulaire maximale dans une première direction et d'une couverture angulaire maximale dans une deuxième direction est supérieure à 0° et égale ou inférieure à 20°, la première direction étant perpendiculaire à la deuxième direction, de préférence chaque couverture angulaire maximale est égale ou inférieure à 5° ou à 1°.

7. Procédé selon l'une quelconque des revendications précédentes, comprenant en outre les étapes consistant à :
obtenir des données indiquant que le motif de balayage réel est différent du motif de balayage prédéterminé ;
modifier le motif de balayage prédéterminé sur la base des données indiquant le motif de balayage réel.

8. Système de supervision du balayage d'un faisceau d'énergie, comprenant :
un appareil (2) configuré pour fournir le faisceau d'énergie ;
un scanner (4) configuré pour balayer le faisceau d'énergie, le scanner (4) comprenant un premier miroir (42) et un deuxième miroir (44), chaque miroir comprenant au moins un codeur (46, 48),
le scanner (4) et l'appareil (2) étant configurés pour fournir le faisceau d'énergie pendant qu'il est balayé selon un motif de balayage prédéterminé (10) ; et
un dispositif ou un système informatique (6) comprenant au moins un processeur ;
**caractérisé par le fait que** :
ledit au moins un processeur est configuré pour :
déterminer (108) un motif de balayage réel du faisceau d'énergie, lorsque l'appareil (2) et le scanner (4) fonctionnent, en traitant des mesures fournies par les codeurs du premier miroir et du deuxième miroir ;
comparer (110) le motif de balayage réel avec une zone de seuil prédéterminée (30-33, 35) ; et
déterminer (112) si le balayage du faisceau d'énergie est anormal sur la base de la comparaison (110).

9. Système selon la revendication 8, dans lequel la zone de seuil prédéterminée (35) ou une majorité de celle-ci ne comprend pas un motif de balayage attendu ; et dans lequel ledit au moins un processeur est configuré pour déterminer (112) si le balayage du faisceau d'énergie est anormal en déterminant qu'il est anormal lorsqu'au moins une partie du motif de balayage réel est à l'extérieur de la zone de seuil prédéterminée (35).

10. Système selon la revendication 8, dans lequel la zone de seuil prédéterminée (30-33) comprend un motif de balayage attendu ; et dans lequel ledit au moins un processeur est configuré pour déterminer (112) si le balayage du faisceau d'énergie est anormal en déterminant qu'il est anormal lorsqu'au moins une partie du motif de balayage réel est à l'intérieur de la zone de seuil prédéterminée (30-33).

11. Système selon l'une quelconque des revendications 8 à 10, dans lequel ledit au moins un processeur est en outre configuré : pour indiquer (114), lorsqu'il détermine (112) que le balayage du faisceau d'énergie est anormal, qu'un objet qui a été traité par l'appareil est incorrectement traité; et/ou pour arrêter (116) l'appareil (2) lorsqu'il détermine (112) que le balayage du faisceau d'énergie est anormal.

12. Système selon l'une quelconque des revendications 8 à 11, dans lequel les encodeurs du premier miroir et du deuxième miroir sont configurés pour fournir les mesures avec une fréquence égale ou supérieure à 10 kHz.

13. Système selon l'une des revendications 8-12, dans lequel ledit au moins un processeur est en outre configuré pour obtenir des données indiquant que le motif de balayage réel est différent du motif de balayage prédéterminé ; et pour modifier le motif de balayage prédéterminé sur la base des données indiquant le motif de balayage réel.

14. Système selon l'une quelconque des revendications 8-13, dans lequel le scanner (4) est utilisé de telle sorte que chacune d'une couverture angulaire maximale dans une première direction et d'une couverture angulaire maximale dans une deuxième direction est supérieure à 0° et égale ou inférieure à 20°, la première direction étant perpendiculaire à la deuxième direction, de préférence chaque couverture angulaire maximale est égale ou inférieure à 5° ou à 1°.

15. Produit programme d'ordinateur **caractérisé en ce qu'**il comporte des instructions qui, lorsqu'elles sont exécutées par ledit au moins un processeur du dispositif ou système informatique (6) du système selon l'une des revendications 8 à 14, amènent le processeur à effectuer les étapes consistant à :
faire fonctionner un appareil et un scanner de sorte qu'un faisceau d'énergie soit fourni pendant qu'il est balayé par le scanner selon un motif de balayage prédéterminé ;
déterminer un motif de balayage réel du faisceau d'énergie, lorsque l'appareil et le scanner fonctionnent, en traitant des mesures fournies par des codeurs d'un premier miroir et d'un deuxième miroir du scanner ;
comparer le motif de balayage réel avec une zone de seuil prédéterminée ;
déterminer si un balayage du faisceau d'énergie est anormal sur la base de la comparaison.
